# EUROPÄISCHE PATENTSCHRIFT

(11) **EP 0 675 272 B1**
(45) Veröffentlichungstag und Bekanntmachung des Hinweises auf die Patenterteilung: **06.08.1997**
(21) Anmeldenummer: 95103008.9
(22) Anmeldetag: 03.03.1995
(51) Int. Cl.: F02B 19/12, H01T 13/54

(54) **Vorkammerzündeinrichtung**
Prechamber ignition device
Dispositif d'allumage à préchambre

(30) Priorität: 29.03.1994 DE 4410858
(43) Veröffentlichungstag der Anmeldung: 04.10.1995
(73) Patentinhaber: Kuhnert, Dieter, Dr., D-74889 Sinsheim (DE); Latsch, Reinhard, Dr., D-74889 Sinsheim (DE)
(72) Erfinder: Kuhnert, Dieter, Dr., D-74889 Sinsheim (DE); Latsch, Reinhard, Dr., D-74889 Sinsheim (DE)
(74) Vertreter: Vetter, Hans, Dipl.-Phys. Dr.

(56) Entgegenhaltungen:
- DE-A- 2 715 943
- DE-A- 3 232 995
- DE-A- 4 011 630
- DE-U- 8 808 250
- DE-U- 9 005 250
- GB-A- 182 599
- GB-A- 2 025 525
- US-A- 2 117 216
- PATENT ABSTRACTS OF JAPAN vol. 16 no. 48 (E-1163) ,6.Februar 1992 & JP-A-03 252078 (TOSHIBA) 11.November 1991,

## Beschreibung

Die Erfindung bezieht sich auf eine Vorkammerzündeinrichtung zur Zündung von vorzugsweise magerem Kraftstoff-Luft-Gemisch, nach der Gattung des Anspruchs 1.

Zündeinrichtungen dieser Art benötigen in vorteihafter Weise einen geringen Energie- und Spannungsbedarf für die Erzeugung eines wirksamen Zündfunkens und weisen dadurch eine deutlich höhere Lebensdauer auf.

Aus der GB-A-2 025 525 ist eine Vorkammerzündeinrichtung gemäß der Gattung des Anspruchs 1 bekannt, die einen Zündbereich besitzt, der zur Längsachse der Vorkammer versetzt und im wesentlichen parallel zur im Funkenstreckenbereich im wesentlichen zylinerförmig ausgebildeten Wand der Vorkammer wandnah angeordnet ist. Dieser Zündbereich ist jedoch so klein, daß die Entflammungssicherheit bei der Zündung insgesamt unbefriedigend ist und auch die Lebensdauer nicht den steigenden Anforderungen bei modernen Motoren entspricht.

In der Patentschrift DE 29 16 285 wird eine Zündeinrichtung beschrieben, die mehrere Verbindungskanäle zwischen der Vorkammer und dem Hauptbrennraum aufweist, die vorwiegend tangential in die Vorkammer einmünden und dadurch in dieser eine drallbehaftete Strömung erzeugen. Die gezeigten Ausführungsformen weisen nur eine einzelne Zündfunkenstrecke auf.

Der Nachteil solcher Anordnungen besteht darin, daß nur an einer Stelle der Vorkammer eine Zündfunkenstrecke ausgebildet wird. Dadurch besteht bei zeitlichen Schwankungen des Zustandes (Zusammensetzung, Temperatur, Stömungsgeschwindigkeit) des Kraftstoff-Luft-Gemisches im Bereich der Funkenstrecke, z.B. infolge von Inhomogenitäten in dem aus dem Hauptbrennraum zugeführten Gemisch oder durch inhomogene Beimischungen von verbrannten Restgasen aus dem vorhergehenden Arbeitszyklus die Möglichkeit, daß während des Zündzeitpunkts kein optimaler Gemischzustand für eine sichere Zündung an der Stelle des Funkenüberschlags vorliegt.

Zudem ergibt sich bei der vorgeschlagenen Anordnung nur eine begrenzte Lebensdauer für die Vorkammerzündeinrichtung, da insbesondere durch den erosiven Verschleiß der Elektrode der notwendige Zündspannungsbedarf sehr bald auf ein von der Zündanlage nicht mehr beherrschtes Maß ansteigt.

Um diese Nachteile zu vermeiden, wurde in der Patentschrift DE 38 21 688 vorgeschlagen, eine dünne Elektrode an ihrem vorderen Ende so abzuwinkeln, daß diese annähernd parallel zu einem in einem Elektrodenträger eingelegten Draht ausgerichtet ist. Bei den verwendeten kreisrunden Drähten ergibt sich zwar eine größere Entflammungssicherheit für das vom Hauptbrennraum über mehrere Überströmkanäle eingeschobene Kraftstoff-Luft-Gemisch, aber im Langzeitbetrieb durch den Abbrand der Elektroden sehr bald eine Vergrößerung des Elektrodenabstands und damit ein von der Zündanlage nicht mehr beherrschter Anstieg der notwendigen Zündspannung.

In einer weiteren Patentschrift (DE 40 11 630) wurde vorgeschlagen, zur Verbesserung der Entflammungssicherheit und der Betriebsdauer bei einer Vorkammerzündkerze mehrere stiftartige Zündelektroden zu verwenden, die an mehreren Stellen des Umfangs des vorderen Teils der Vorkammer Funkenstrecken ausbilden.

Eine solche Anordnung hat zwar den Vorteil, daß durch die Verwendung von mehreren Funkenstrecken die Sicherheit bei der Entflammung zunimmt. Das gilt vor allem dann, wenn in Verbindung mit einer - wie vorgeschlagen - wirbelbehafteten Strömung ein Abreißen des Funkens auftritt, wobei nachfolgend ein Zündfunkenüberschlag an einer anderen Funkenstrecke oder sogar an mehreren anderen Funkenstrecken erzeugt wird, was die Entflammungswahrscheinlichkeit erfahrungsgemäß deutlich verbessert. Insgesamt aber ist der Bereich der Vorkammer für Funkenüberschläge noch klein und damit die Entflammungsicherheit bei der Zündung insgesamt unbefriedigend.

Zudem ist auch die Lebensdauer für eine solche Anordnung noch sehr begrenzt und erfüllt nicht die steigenden Anforderungen insbesondere bei modernen Motoren, mit denen strenge Abgasgesetze mit hoher Langzeitkonstanz und ohne wesentliche Zunahme des Zündspannungsbedarfs erfüllt werden müssen.

Für den Fall, daß der Spannungsbedarf selbst gering und sein Anstieg über eine große Betriebdauer hinweg klein gehalten werden kann, ergeben sich zudem Einsparpotentiale bei der Dimensionierung der Zündanlage (z.B. bei der Zündspule und den Isolierungen der Zündleitungen).

Der vorliegenden Erfindung liegt deshalb die Aufgabe zugrunde, die bekannten Zündelektrodenanordnungen derart weiterzubilden, daß einerseits der Zündspannungsbedarf, insbesondere beim Betrieb mit magerem Kraftstoff-Luft-Gemischen abgesenkt werden kann und durch geringe Änderungen der Elektrodenverhältnisse bei Langzeitbetrieb die Lebensdauer der Vorkammerzündeinrichtung weiter vergrößert wird, und andererseits der Aufwand für die Zündanlage (Zündenergieerzeugung, Isolierung) vermindert werden kann. Vor allem aber soll die Entflammungssicherheit bei verdünnten Kraftstoff-Luft-Gemischen (Magergemisch, Abgasrückführung) wesentlich verbessert werden.

Diese Aufgabe wird durch die Merkmale des Anspruchs 1 gelöst. Ausgestaltungen und Weiterbildungen der Erfindung sind in den Unteransprüchen aufgeführt.

In vorteilhafter Weise werden an einem zentralen Elektrodenträger mehrere insbesondere rechteckige Zündelektroden befestigt, die im vorderen Teilbereich der Vorkammer im wesentlichen parallel zur Hauptachse und parallel zur Außenwand der Vorkammer geführt werden und dort mehrere Funkenstreckenbereiche bilden.

Durch eine vergleichsweise lange Führung der Zündelektroden parallel zum vorderen Teilbereich der Vorkammer ergibt sich insgesamt ein besonders großer Oberflächenbereich für einen Funkenüberschlag und zudem eine besonders große Fläche für den erosiven Verschleiß der Zündelektroden. Die Grundfläche der Zündfunkenstrecke wird dadurch weiter vergrößert, daß eine rechteckige Elektrodenform verwendet wird, wobei deren größere Seitenfläche als Stirnseite der Zündelektrode dient.

Die rechteckige Form der Zündelektroden hat zudem noch den Vorteil, daß an den zur Vorkammerwand gerichteten Seiten scharfe Kanten entstehen, die eine sehr hohe elektrische Feldstärke bedingen und damit einen besonders geringen Zündspannungsbedarf für die elektrische Zündung des Vorkammergemisches ergeben.

Weitere Vorteile ergeben sich durch eine um die Hauptachse der Vorkammer rotierende Drallströmung die z.B. dadurch erzeugt wird, daß mindestens eine der Verbindungsbohrungen zwischen Vorkammer und Hauptbrennraum tangential in die im wesentlichen symmetrische Vorkammer einmündet.

In diesem Fall ergibt sich eine besonders gute Entflammungssicherheit, da in den Zündfunkenstrecken, die zwischen den parallel zur Wand geführten Einzelelektroden und der Vorkammerwand vorhanden sind, zum Zeitpunkt der Einleitung der elektrischen Zündung die Wahrscheinlichkeit besonders groß ist, daß zwischen den Einzelelektroden und der als Masseelektrode wirkende Vorkammerwand ein frisches Gemisch unter besonders guten Bedingungen für die Entflammung sich befindet.

Ein weiterer Vorteil bei einer rotierenden Strömung ist der, daß durch die einzelnen wandnah geführten Elektroden die Strömungsgeschwindigkeit im wandnahen Bereich abgesenkt wird, was die Verwehung des Zündfunkens unterbindet und die Entflammung begünstigt. Weiterhin kann davon ausgegangen werden, daß durch die sich auf sehr hohem Temperaturniveau befindenden Zündelektroden das Gemisch im wandnahen Bereich aufgewärmt und die chemische Reaktionsgeschwindigkeit erhöht wird was die Entflammungssicherheit weiter begünstigt.

Die Gefahr der Selbstzündung an den heißen Elektrodenoberflächen ist bei Verwendung von katalytisch wirkenden Metallen erfahrungsgemäß besonders gering. Das gilt vor allem bei Oberflächen von Metallen der Platingruppe oder Legierungen derselben.

Um den Verschleiß der als Masseelektrode dienenden Innenwand der Vorkammer möglichst gering zu halten und gleichzeitig für eine sichere Wärmeabfuhr aus dem dem Hauptbrennraum ausgesetzten vorderen Bereich der Vorkammer zu erreichen, ist dieser Bereich vorteilhafterweise aus Nickel oder aus einer nickelhaltigen Legierung gefertigt. Schließlich ergeben sich besonders kostengünstige Möglichkeiten für die Herstellung der innerhalb der Vorkammer angeordneten Zündelektroden, wenn diese aus einem flachen Grundmaterial als Stanz-Biege-Teil hergestellt werden können. Zudem ist eine Befestigung am im wesentlichen zentral in der Vorkammer angeordneten Elektrodenträger durch eine Impulsschweißung besonders dauerhaft und wirtschaftlich ausführbar.
Nachfolgend sind Ausführungsbeispiele der Erfindung anhand von Zeichnungen beschrieben. Dabei zeigen:
- **Fig. 1**: die Vorkammerzündeinrichtung im Einbauzustand mit einem Längsschnitt durch deren vorderen Vorkammerbereich,
- **Fig. 2**: einen Querschnitt durch den vorderen Vorkammerbereich entlang der Schnittlinie X-X gemäß Fig. 1 mit Blick auf die korbartige Anordnung der Einzelelektroden, und
- **Fig. 3**: schematisch das Verfahren der Befestigung der Zentralelektrode am Elektrodenträger mit dem Impulsschweißverfahren.

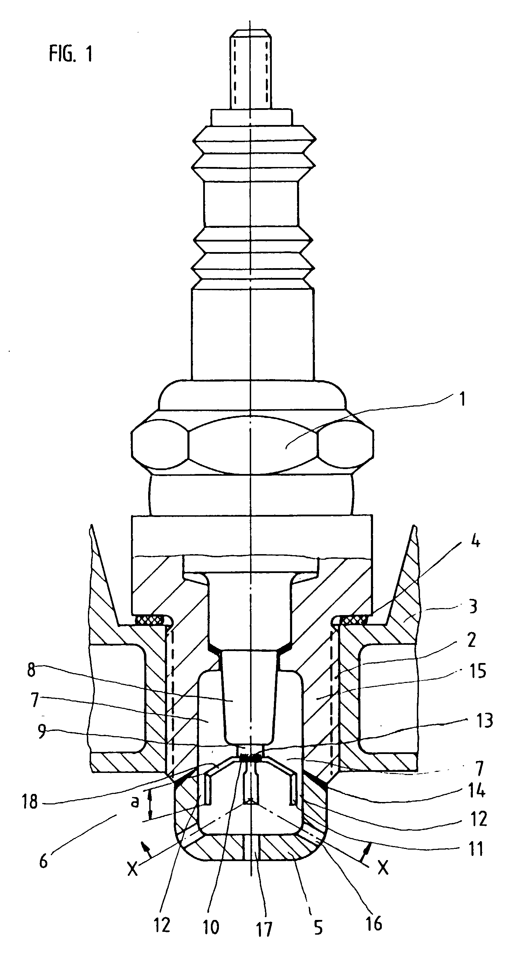

In **Fig. 1** ist die eine Vorkammer 7 aufweisende Vorkammerzündeinrichtung als zündkerzenähnliche einschraubbare Einheit 1 ausgebildet, die mit einem Einschraubgewinde 2 in die Zündkerzenbohrung des Zylinderkopfes eines Ottomotores 3 unter Verwendung einer Unterlegscheibe 4 eingeschraubt ist, wobei ein Teilbereich 5 der Vorkammer 7 in den Brennraum 6 des Ottomotors hineinragt.

Die in Richtung der Hauptachse der Einheit 1 orientierte Vorkammer 7 enthält im vom Brennraum 6 abgewandten Bereich einen Isolator 8, der einen zentralen Elektrodenträger 9 umschließt. An diesem Elektrodenträger 9 ist eine korbartige Anordnung von Zündelektroden 10 angebracht, die mit ihren vier Einzelarmen mit der Innenwand des Teilbereichs 5 der Vorkammer 7, die als Masseelektrode dient, mehrere parallel zur Wand verlaufende Funkenstreckenbereiche 12 mit der Länge a bilden. Hierzu verlaufen die Zündelektroden 10 zunächst vom Elektrodenträger 9 aus schräg zur Innenwand des Teilbereiches 5 hin, wobei sich von den Enden von schräg verlaufenden Traversen 18 der Zündelektroden 10 aus abgewinkelte (oder abgebogene) Zündbereiche 11 parallel zum zylindrischen Bereich dieser Innenwand in Richtung zum Brennraum hin erstrecken.

Der Elektrodenträger 9 und die korbartige Anordnung der Zündelektroden 10, die vorzugsweise als Stanz-Biegeteil hergestellt wird, sind durch eine Schweißung 13 verbunden.

Der in den Brennraum 6 hineinragende Teilbereich 5 der Vorkammer 7 ist aus Nickel, aus einer Nickelbasislegierung oder aus einem Werkstoff mit vergleichbaren Eigenschaften hergestellt und mit dem übrigen Bereich 15 der Vorkammerzündeinrichtung durch eine Schweißung 14 verbunden. Bei Verwendung der genannten Werkstoffe ergibt sich zum einen eine besonders gute Wärmeabfuhr aus dem thermisch hochbeanspruchten Teilbereich 5 der Vorkammer 7. Zudem wird der erosive Verschleiß der als Masseelektrode dienenden Wand des vorderen Teilbereichs 5 der Vorkammer durch die besonderen Eigenschaften des verwendeten Werkstoffes sehr gering gehalten.

Für eine besonders schnelle und gleichmäßige Entflammung des Kraftstoff-Luft-Gemischs im Hauptbrennraum dienen ein oder mehrere Zündfackelstrahlen, die in der Vorkammer dadurch entstehen, daß das während des Kompressionstaktes in die Vorkammer eingebrachte Kraftstoff-Luft-Gemisch durch ein oder mehrere Zündfunken in den Funkenstreckenbereichen gezündet wird und infolge der starken Expansion bei der Verbrennung der Vorkammerinhalt durch Bohrungen herausgepreßt wird. Hierzu sind um eine zentrale Bohrung 17 im ebenen Boden des Teilbereichs 5 der Vorkammer 7 vier am Umfang verteilte äußere Bohrungen 16 angeordnet, die im Übergangsbereich zwischen dem Boden und der zylindrischen Wand des Teilbereichs 5 schräg radial nach außen verlaufen.

Für eine möglichst große Konstanz der Verhältnisse in den Funkenstreckenbereichen 12 ist es wichtig, daß die axiale Ausdehnung der Einzelarme der Zündelektroden 10 mit der Länge a, den zylindrischen Wandbereich des Teilbereichs 5 möglichst weit überdecken.

Der Funkenstreckenbereich 12 mit der Länge a liegt im vorderen Teilbereich 5 der Vorkammer 7, wobei sich mehr als die Hälfte, vorzugsweise mehr als zwei Drittel des Kammervolumens oberhalb der Traversen 18 befindet.

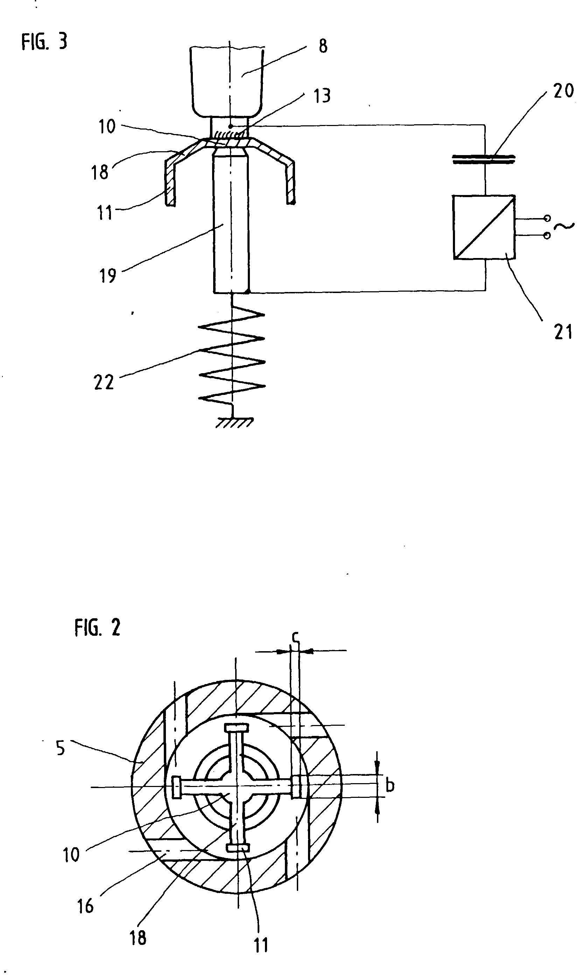

In **Fig. 2** ist ein Schnitt durch den vorderen Teil der Vorkammer in der Höhe der äußeren Bohrungen 16 entlang der Schnittlinie X-X in Fig. 1 dargestellt, wobei der Blick von unten auf die korbartige Anordnung der Zündelektroden 10 gerichtet ist. Das Schnittbild zeigt als besonders vorteilhafte Ausführung die bei dieser Ansicht tangential in die Vorkammer 7 einmündenden äußeren Bohrungen 16 zwischen Brennraum 6 und Vorkammer 7.

Durch die tangentiale Anordnung wird beim Eintritt des Kraftstoff-Luft-Gemisches innerhalb der Vorkammer 7 eine Wirbelströmung erzeugt, die im wesentlichen quer zu den langgestreckten Einzelarmen der Zündelektroden 10 gerichtet ist. Dadurch ist gesichert, daß sich zur Zeit der Zündung immer ein unverdünntes frisches Kraftstoff-Luft-Gemisch, das aus dem Brennraum 6 stammt, in den langgestreckten Funkenstreckenbereichen 12 befindet. Das vor Verdichtungsbeginn in der Vorkammer 7 allein vorhandene verbrannte Abgas des vorherigen Verbrennungszyklus wird durch den Frischgaseintritt weitgehend in den hinteren Teil der Vorkammer abgedrängt, so daß sich in den Funkenstreckenbereichen 12 besonders günstige Zündbedingungen ergeben.

Diese werden noch dadurch weiter verbessert, daß die wandnahe Wirbelströmung durch die Einzelarme der Zündelektroden 10 abgebremst und der Zündfunke nicht verweht wird. Zudem ergibt sich durch die sich auf hohem Temperaturniveau befindende Wand des vorderen Teilbereichs 5 der Vorkammer 7 und der Zündbereiche 11 eine Vorwärmung des frischen Kraftstoff-Luft-Gemisches, was ebenfalls die Funkenbildung begünstigt und gleichzeitig eine schnelle Ausbreitung des durch die Zündung entstehenden Flammenkerns bewirkt.

Ein besonders günstiges Verschleißverhalten der Einzelarme der Zündelektroden 10 wird dadurch erreicht, daß zur Vergrößerung der Verschleißfläche die Breite b der einen rechteckigen Querschnitt aufweisenden Zündelektroden 10 deutlich größer ausgebildet ist als deren Dicke c (vgl. Fig. 2). Dabei ist die Breite der Traversen 18 etwas gegenüber der der Zündbereiche 11 verringert, was jedoch nicht in jedem Fall erforderlich ist.

Durch eine scharfkantige Ausführung der Zündbereiche 11 der Zündelektroden 10 wird die elektrische Feldstärke stark erhöht und dadurch eine niedrige Durchbruchspannung für den Zündfunken geschaffen.

In **Fig. 3** ist schematisch das Verfahren zur Befestigung der korbartigen Anordnung der Zündelektroden 10 an dem Elektrodenträger 9 durch Impulsschweißung dargestellt. Dazu wird die korbartige Anordnung der Zündelektroden 10 mittels einer Feder 22 zwischen dem Elektrodenträger 9 und einer Schweißelektrode 19 eingespannt. Der zentrale Elektrodenträger 9 und die Schweißelektrode 19 sind mit einem Kondensator 20 elektrisch so verbunden, daß dieser durch eine schnelle Schalteinheit 21 be- und entladen werden kann. Bei der Entladung fließt durch die gezeigte Anordnung kurzzeitig ein extrem hoher Strom, so daß zwischen dem Elektrodenträger 9 und den Zündelektroden 10 im Berührungsbereich 13 kurzzeitig eine sehr große Wärmemenge freigesetzt wird, die eine sichere Schweißung 13 zwischen dem üblicherweise aus Nickel bzw. aus einer Nickelbasislegierung hergestellten Elektrodenträger 9 und der korbartigen Anordnung der Zündelektroden 10 ergibt.

In der obigen Beschreibung und den Zeichnungen ist eine korbartige Anordnung von vier Zündelektroden 10 dargestellt. Selbstverständlich kann diese Zahl auch variieren, wobei vorzugsweise wenigstens zwei Zündelektroden vorhanden sein sollten.

Anstelle aus Nickel oder einer Nickelbasislegierung kann auch ein Material mit ähnlichen Eigenschaften eingesetzt werden. Dabei kann selbstverständlich auch der gesamte Teil der Vorkammer 7 aus einem solchen Material bestehen, mindestens jedoch die Vorkammerwand im Funkenstreckenbereich 12.

Zur Herstellung der Zündelektroden eignet sich ein Metall der Platingruppe oder eine Legierung eines solchen Metalls. Die Zündelektroden können jedoch auch aus einem kostengünstigen Elektrodenmaterial, wie Wolfram, bestehen, das mit einem Metall der Platingruppe oder einer entsprechenden Legierung beschichtet ist.

## Patentansprüche

1. Vorkammerzündeinrichtung zur Zündung von vorzugsweise magerem Kraftstoff-Luft-Gemisch, mit einer Vorkammer (7), die einen in die Vorkammer (7) hineinragenden Elektrodenträger (9) enthält, an dem mindestens eine Zündelektrode (10) befestigt ist, die wenigstens einen Zündbereich (11) enthält, der mit einer Innenwand der Vorkammer (7) mindestens eine, im wesentlichen quer zur Längsachse der Vorkammer (7) gerichtete Zündstrecke bildet, wobei die Innenwand als Masseelektrode wirkt und der Zündbereich (11) der wenigstens einen Zündelektrode (10) zur Längsachse der Vorkammer (7) versetzt und im wesentlichen parallel zur im Funkenstreckenbereich (12) im wesentlichen zylinderförmig ausgebildeten Wand der Vorkammer (7) wandnah angeordnet ist, dadurch gekennzeichnet, daß mindestens einer der wandnah verlaufenden Zündbereiche (11) der Zündelektroden (10) eine Länge aufweist, die größer ist als die Hälfte des Halbmessers des im wesentlichen kreisförmigen Querschnittes in dem entsprechenden Vorkammerbereich.

2. Einrichtung nach Anspruch 1, dadurch gekennzeichnet, daß an dem zentralen Elektrodenträger (9) eine korbartige Anordnung von mehreren als Einzelarme ausgebildeten Zündelektroden (10) angeordnet ist.

3. Einrichtung nach Anspruch 2, dadurch gekennzeichnet, daß die Einzelarme der Zündelektroden (10) vom zentralen Elektrodenträger (9) aus sternförmig zur Wand der Vorkammer (7) hin verlaufen und dort abgewinkelt oder abgebogen in die Zündbereiche (11) übergehen.

4. Einrichtung nach einem der vorhergehenden Ansprüche, dadurch gekennzeichnet, daß die Einzelarme der Zündelektroden (10) einen im wesentlichen rechteckförmigen Querschnitt aufweisen, wobei die der Wand der Vorkammer (7) zugewandte Seite (b) eines Zündbereichs (11) breiter ist als dessen Dicke (c).

5. Einrichtung nach einem der vorhergehenden Ansprüche, dadurch gekennzeichnet, daß wenigstens die Vorkammerwand in dem oder den Funkenstreckenbereichen (12) aus Nickel oder aus einer Nickelbasislegierung besteht.

6. Einrichtung nach Anspruch 5, dadurch gekennzeichnet, daß wenigstens der vordere brennkammerseitige Teilbereich (5) der Vorkammer (7) aus Nickel oder aus einer Nickelbasislegierung besteht.

7. Einrichtung nach einem der vorhergehenden Ansprüche, dadurch gekennzeichnet, daß die Vorkammer (7) in ihrer Längsrichtung eine größere Ausdehnung im Vergleich zu ihrer Querrichtung aufweist.

8. Einrichtung nach einem der vorhergehenden Ansprüche, dadurch gekennzeichnet, daß die Vorkammer (7) im montierten Zustand wenigstens mit einem Teilbereich (5) in den Hauptbrennraum (6) einer Brennkraftmaschine eingreift.

9. Einrichtung nach Anspruch 8, dadurch gekennzeichnet, daß der Zündbereich (11) der wenigstens einen Zündelektrode (10) im wesentlichen im Teilbereich (5) angeordnet ist.

10. Einrichtung nach einem der vorhergehenden Ansprüche, dadurch gekennzeichnet, daß der vordere Teilbereich (5) der Vorkammer (7) Verbindungsbohrungen (16, 17) zum Hauptbrennraum aufweist.

11. Einrichtung nach Anspruch 10, dadurch gekennzeichnet, daß eine der Verbindungsbohrungen (17) im wesentlichen zentral und parallel zur Hauptachse der Vorkammerzündeinrichtung angeordnet ist.

12. Einrichtung nach Anspruch 10 oder 11, dadurch gekennzeichnet, daß mindestens eine radial äußere Verbindungsbohrung (16) im wesentlichen tangential in die Vorkammer (7) eintritt.

13. Einrichtung nach einem der Ansprüche 2 bis 12, dadurch gekennzeichnet, daß die korbartige Anordnung der Zündelektroden (10) als Stanz-Biegeteil aus dünnem Blech ausgebildet ist.

14. Einrichtung nach einem der Ansprüche 2 bis 13, dadurch gekennzeichnet, daß die korbartige Anordnung der Zündelektroden (10) mit dem am im wesentlichen zentral angeordneten Elektrodenträger (9) durch eine Impulsschweißung verbunden ist.

15. Einrichtung nach einem der vorhergehenden Ansprüche, dadurch gekennzeichnet, daß die wenigstens eine Zündelektrode (10) im wesentlichen aus einem Metall der Platingruppe oder einer Legierung eines solchen Metalls besteht.

16. Einrichtung nach einem der Ansprüche 1 bis 14, dadurch gekennzeichnet, daß die wenigstens eine Zündelektrode (10) im wesentlichen aus einem kostengünstigen Elektrodenmaterial besteht, das mit einem Metall der Platingruppe oder einer Legierung eines solchen Metalls beschichtet ist.

17. Einrichtung nach Anspruch 16, dadurch gekennzeichnet, daß Wolfram oder eine im wesentlichen daraus bestehenden Legierung als Elektrodenmaterial eingesetzt ist, das mit einem Metall der Platingruppe oder Legierung derselben beschichtet ist.

## Claims

1. Prechamber ignition device for the ignition of preferably lean fuel-air mixtures, with a prechamber (7) containing an electrode support (9) extending into the prechamber (7) and to which is fixed one or more ignition electrodes (10) with one or more ignition zones (11), forming with one inside wall of the prechamber (7) an ignition gap aligned essentially at right-angles to the longitudinal axis of the prechamber (7), wherein the inside wall acts as earth electrode and the ignition zone (11) of at least one ignition electrode (10) is offset relative to the longitudinal axis of the prechamber (7) and is arranged close to the wall and essentially parallel to the wall of the prechamber (7) which is basically cylindrical in the spark gap zone (12), characterized in that one or more of the ignition zones (11) of the ignition electrodes (10) running close to the wall has a length which is greater than half the radius of the essentially circular cross-section in the relevant prechamber zone.

2. Device according to claim 1, characterized in that a cage-like assembly of several ignition electrodes (10) in the form of individual arms is mounted on the central electrode support (9).

3. Device according to claim 2, characterized in that the individual arms of the ignition electrodes (10) extend radially from the central electrode support (9) to the wall of the prechamber (7) where they merge, angled or bent, into the ignition zones (11).

4. Device according to any of the preceding claims, characterized in that the individual arms of the ignition electrodes (10) have an essentially rectangular cross-section, with the side (b) of an ignition zone (11) which faces the wall of the prechamber (7) being wider than its thickness (c).

5. Device according to any of the preceding claims, characterized in that at least the prechamber wall in the spark gap zone or zones (12) is made of nickel or of a nickel-based alloy.

6. Device according to claim 5, characterized in that at least the front combustion-chamber-side partial zone (5) of the prechamber (7) is made of nickel or of a nickel-based alloy.

7. Device according to any of the preceding claims, characterized in that the prechamber (7) extends further longitudinally than it does transversely.

8. Device according to any of the preceding claims, characterized in that the prechamber (7), when assembled, engages with at least one partial zone (5) in the main combustion chamber (6) of an internal combustion engine.

9. Device according to claim 8, characterized in that the ignition zone (11) of at least one ignition electrode (10) is located essentially in the partial zone (5).

10. Device according to any of the preceding claims, characterized in that the front partial zone (5) of the prechamber (7) has connecting passages (16, 17) to the main combustion chamber.

11. Device according to claim 10, characterized in that one of the connecting passages (17) is arranged essentially centrally and parallel to the main axis of the prechamber ignition device.

12. Device according to claim 10 or 11, characterized in that at least one radially external connection passage (16) enters the prechamber (7) essentially tangentially.

13. Device according to any of claims 2 to 12, characterized in that the cage-like assembly of the ignition electrodes (10) is in the form of a bent stamping of thin sheet steel.

14. Device according to any of claims 2 to 13, characterized in that the cage-like assembly of the ignition electrodes (10) is joined to the essentially centrally-mounted electrode support (9) by an impulse spot weld.

15. Device according to any of claims, characterized in that one or more ignition electrodes (10) is essentially comprised of a metal of the platinum group or an alloy of such a metal.

16. Device according to any of claims 1 to 14, characterized in that one or more ignition electrodes (10) is essentially comprised of a cost-effective electrode material, coated with a metal of the platinum group or an alloy of such a metal.

17. Device according to claim 16, characterized in that tungsten or an alloy comprised mainly thereof is used as electrode material, and is coated with a metal of the platinum group or an alloy of the same.

## Revendications

1. Dispositif d'allumage de chambre de précombustion pour l'allumage d'un mélange carburant-air de préférence maigre, avec une chambre de précombustion (7), qui contient un porte-électrode (9) pénétrant dans la chambre de précombustion (7), sur lequel est fixée au moins une électrode d'allumage (10), laquelle contient au moins une zone d'allumage (11), qui forme avec une paroi intérieure de la chambre de précombustion (7), au moins un parcours d'allumage dirigé sensiblement transversalement à l'axe longitudinal de la chambre de précombustion (7), la paroi intérieure agissant comme électrode de masse et la zone d'allumage (11) d'au moins une électrode d'allumage (10) étant décalée par rapport à l'axe longitudinal de la chambre de précombustion (7) et étant située sensiblement parallèlement à la paroi de la chambre de précombustion (7), sensiblement cylindrique, formée dans la zone (12) de la distance de décharge, à proximité de cette paroi, caractérisé en ce qu'au moins l'une des zones d'allumage (11), s'étendant à proximité de la paroi, des électrodes d'allumage (10), présente une longueur, qui est supérieure à la moitié du demi-diamètre de la section sensiblement circulaire dans la zone correspondante de la chambre de précombustion.

2. Dispositif selon la revendication 1, caractérisé en ce que plusieurs électrodes d'allumage (10), conformées en bras individuels, sont disposées en corbeille sur le porte-électrode (9) central.

3. Dispositif selon la revendication 2, caractérisé en ce que les bras individuels des électrodes d'allumage (10) s'étendent en étoile, à partir du porte-électrode (9) central vers la paroi de la chambre de précombustion (7) et se prolongent à cet endroit, coudés ou repliés, par les zones d'allumage (11).

4. Dispositif selon l'une des revendications précédentes, caractérisé en ce que les bras individuels des électrodes d'allumage (10) présentent une section sensiblement rectangulaire, le côté (b), tourné vers la paroi de la chambre de précombustion (7), d'une zone d'allumage (11), étant plus large que son épaisseur (c).

5. Dispositif selon l'une des revendications précédentes, caractérisé en ce qu'au moins la paroi de la chambre de précombustion, dans la ou les zone(s) (12) de la distance de décharge, est faite de nickel ou d'un alliage à base de nickel.

6. Dispositif selon la revendication 5, caractérisé en ce qu'au moins la zone partielle (5) avant, côté chambre de combustion, de la chambre de précombustion (7), est faite de nickel ou d'un alliage à base de nickel.

7. Dispositif selon l'une des revendications précédentes, caractérisé en ce que la chambre de précombustion (7) présente, dans sa direction longitudinale, une plus grande extension que dans sa direction transversale.

8. Dispositif selon l'une des revendications précédentes, caractérisé en ce que la chambre de précombustion (7), à l'état monté, s'engage au moins avec une zone partielle (5) dans la chambre de précombustion principale (6) d'un moteur à combustion interne.

9. Dispositif selon la revendication 8, caractérisé en ce que la zone d'allumage (11) d'au moins une électrode d'allumage (10) est située sensiblement dans la zone partielle (5).

10. Dispositif selon l'une des revendications précédentes, caractérisé en ce que la zone partielle (5) avant de la chambre de précombustion (7) présente des perçages de liaison (16, 17) avec la chambre de combustion principale.

11. Dispositif selon la revendication 10, caractérisé en ce que l'un des perçages de liaison (17) est sensiblement central et parallèle à l'axe principal du dispositif d'allumage de la chambre de précombustion.

12. Dispositif selon la revendication 10 ou 11, caractérisé en ce qu'au moins un perçage de liaison (16) radialement extérieur pénètre sensiblement tangentiellement dans la chambre de précombustion (7).

13. Dispositif selon l'une des revendications 2 à 12, caractérisé en ce que la disposition en corbeille des électrodes d'allumage (10) est obtenue par une pièce découpée et pliée dans une tôle mince.

14. Dispositif selon l'une des revendications 2 à 13, caractérisé en ce que l'agencement en corbeille des électrodes d'allumage (10) est assemblé au porte-électrode (9), sensiblement central, par une soudure par impulsions.

15. Dispositif selon l'une des revendications précédentes, caractérisé en ce que la au moins une électrode d'allumage (10) est faite essentiellement d'un métal du groupe du platine ou d'un alliage d'un tel métal.

16. Dispositif selon l'une des revendications 1 à 14, caractérisé en ce que la au moins une électrode d'allumage (10) est faite essentiellement d'un matériau pour électrode d'un prix avantageux, qui est recouvert d'un métal du groupe du platine ou d'un alliage d'un tel métal.

17. Dispositif selon la revendication 16, caractérisé en ce que du tungstène ou un alliage essentiellement constitué de celui-ci est utilisé comme matériau pour électrode, recouvert d'un métal du groupe du platine ou d'un alliage de celui-ci.
